# EUROPÄISCHE PATENTANMELDUNG

(11) **EP 3 244 693 A1**
(43) Veröffentlichungstag der Anmeldung: **15.11.2017**
(21) Anmeldenummer: 17166258.8
(22) Anmeldetag: 12.04.2017
(51) Int. Cl.: H05B 6/12, A47J 36/02

(54) **KOCHSYSTEM MIT KOCHGESCHIRR UND INDUKTIONSKOCHFELD**

(30) Priorität: 11.05.2016 DE 102016108683
(71) Anmelder: Miele & Cie. KG, 33332 Gütersloh (DE)
(72) Erfinder: Ebke, Daniel, 33613 Bielefeld (DE); Metz, Thomas, 32257 Bünde (DE); Stahl, Hermann, 32289 Rödinghausen (DE); Ennen, Volker, 32130 Enger (DE)

(57) **Zusammenfassung**

Die Erfindung betrifft ein Kochsystem (1) mit einem Induktionskochfeld (2) mit wenigstens einer ersten Spuleneinheit (22) und mit wenigstens einem Kochgeschirr (3), welches auf dem Induktionskochfeld (2) oberhalb der ersten Spuleneinheit (22) angeordnet ist, wobei das Kochgeschirr (3) einen Kochgeschirrboden (32) aufweist, welcher durch die erste Spuleneinheit (22) induktiv erwärmbar ist. Das Kochsystem (1) ist dadurch gekennzeichnet, dass der Kochgeschirrboden (32) eine erste Bodenzone (33) und eine zweite Bodenzone (34) aufweist, wobei die erste Bodenzone (33) eine höhere induktive Leistungsaufnahmefähigkeit als die zweite Bodenzone (34) aufweist.

## Beschreibung

Die vorliegende Erfindung betrifft ein Kochsystem gemäß dem Oberbegriff des Patentanspruchs 1, ein Kochgeschirr zur Verwendung bei einem derartigen Kochsystem gemäß dem Patentanspruch 13, ein Induktionskochfeld zur Verwendung bei einem derartigen Kochsystem gemäß dem Patentanspruch 14 sowie ein Verfahren zur Bedienung eines derartigen Kochsystems gemäß dem Patentanspruch 15.

Im Bereich der heimischen Kochprozesse geht der Trend dahin, dass die Küche in den Wohnraum integriert werden soll. Die Küche soll dabei vorzugsweise möglichst wenig oder gar nicht als solche erkennbar sein. Insbesondere sollen die Kochfelder nicht mehr als solche wahrgenommen werden sondern optisch immer weiter aus der Küche verschwinden. Hierzu gehört es auch, die Bedienelemente der Kochfelder immer unauffälliger zu gestalten oder vollständig verschwinden zu lassen.

Um die Bedienelemente eines Kochfeldes zu vereinfachen, zu reduzieren bzw. zumindest zeitweise entbehrlich zu machen kann beispielsweise eine Temperaturregelung des Kochfeldes durch dieses selbst erfolgen. Dies kann den Garprozess nicht nur sicherer machen und den Benutzer entlasten, sondern auch die Bedienelemente vereinfachen, reduzieren bzw. zumindest während des Garprozesses überflüssig machen, so dass diese während dieser Zeitdauer z.B. abgenommen oder weggeklappt werden können.

Aus der US 6,953,939 B2 ist ein System und ein Verfahren bekannt, um Gargeschirre und andere Objekte automatisch mittels des Systems zu erwärmen, wobei eine Datenübertragung von einem Gargeschirr auf eine Steuereinheit des Systems mittels einer RFID-Technologie zustande kommt. Das Geschirr umfasst dazu einen RFID-Tag und einen Temperatursensor.

Aus der DE 197 29 662 A1 ist ein Informations-Übertragungssystem für automatisch zu betreibende Kochgefäße auf einer Beheizungseinrichtung einer Kochstelle bekannt, welches Informationen von Sensoren, die sich im Inneren des Kochgefäßes befinden, an Empfangsmittel der Beheizungseinrichtung überträgt. Dazu befindet sich an dem Kochgefäß oder dessen Deckel eine Sendespule zum Aussenden der Signale.

Aus der DE 10 2009 003 105 A1 ist ein Transponder, insbesondere ein RFID-Tag, für ein Gargeschirr sowie ein Gargeschirr mit einem derartigen Transponder bekannt, wobei der Transponder hochtemperaturfest ist und mindestens einen Temperatursensor aufweist.

Aufgrund seiner hochtemperaturfesten Ausgestaltung kann der Transponder an einer Stelle auf dem Gargeschirr angebracht werden, welche sich nahe an dem zu erwärmenden Gargut befindet.

Nachteilig ist bei den zuvor beschriebenen Systemen und Vorrichtungen, dass eine Kommunikation zwischen Kochgeschirr und Kochfeld bzw. Kochstelle oder dergleichen über eine Funkübertragung z.B. mittels Transpondertechnik stattfindet, was zusätzliche Kosten für Kochgeschirr und Kochfeld bedeuten kann.

Nachteilig ist ferner, dass die Temperaturerfassung und Messdatenübertragung auf der Seite des Kochgeschirrs elektrische Energie erfordert, welche üblicherweise im Kochgeschirr über eine Batterie bzw. einen Akkumulator bereitgestellt werden muss. Da derartige elektronische Systeme der Spülmaschinentauglichkeit des Kochgeschirrs üblicherweise widersprechen, kann es erforderlich sein, diese Sensoren bzw. ihre Kommunikationselemente vor der Reinigung vom Kochgeschirr entfernen und danach wieder montieren zu müssen. Dies kann einen zusätzlichen und höchst unerwünschten Aufwand für den Benutzer bedeuten. Auch können bei mehreren derartigen Kochgeschirren die jeweiligen Sensoren bzw. Kommunikationselemente vertauscht werden bzw. der Benutzer muss aufmerksam sein, um dies zu vermeiden.

Besondern nachteilig ist, dass die Kommunikation von Temperaturwerten vom Kochgeschirr zum Kochfeld und insbesondere die Einstellung z.B. einer Leistungsstufe des Kochfeldes in Reaktion auf die empfangenen Temperaturwerte eine Fernwirkung darstellen kann, d.h. eine Steuerung und bzw. oder eine Regelung eines Gerätes durch einen Befehl, der außerhalb der Sichtweite des Gerätes vorgenommen werden kann. Somit kann zwischen den Teilnehmern eine Kommunikation und damit einhergehend eine gegenseitige oder zumindest einseitige Beeinflussung stattfinden, auch wenn sich diese nicht in ihrem bestimmungsgemäßen Einsatz befinden. Mit anderen Worten könnte z.B. auch eine Bedienung des Kochfeldes bzw. der Kochstelle durch das Kochgeschirr bewirkt werden, obwohl sich das Kochgeschirr gar nicht auf dem Kochfeld bzw. auf der Kochstelle befindet. Da dies die Sicherheit des Benutzer gefährden kann, sind derartige Fernwirkungen im Haushalt gemäß der Norm DIN EN 60335-01 (VDE 0700-1) zu unterbinden. Die zuvor beschriebenen Systeme und Vorrichtungen könnten somit nicht normgerecht sein, was ihren Einsatz verhindern kann.

Aus der DE 197 54 851 A1 ist ein Induktions-Kochsystem bekannt, dessen Kochgeschirr durch einen temperaturabhängig bewegten Permanentmagneten temperaturgeregelt ist und sich in einem wärmeisolierten Übertopf befindet. Der Permanentmagnet wird durch ein Thermobimetall bewegt, welches in einem Luftspalt zwischen Kochgeschirrboden und Übertopfboden angeordnet ist. Die Regler-Konstruktionsanordnung ist so weit unter den Kochgeschirrboden geschoben, dass sie vollständig innerhalb des Übertopfmantels liegt. Das Bimetall ist nicht ferromagnetisch. Der unter der Kochstelle angeordnete Reedkontakt, auf den der Permanentmagnet einwirkt, befindet sich zur Abschirmung des Induktionsfeldes in einem oben offenen Rohr aus ferromagnetischem Material.

Bei diesem Kochsystem kann zwar auf eine Kommunikation mittels Funkübertragung verzichtet werden. Nachteilig ist jedoch, dass hierzu ein hoher Aufwand erforderlich ist, indem ein sehr spezieller und aufwendiger Topf als Kochgeschirr verwendet werden und die Kochstelle entsprechend ausgebildet sein muss. Dies kann zu zusätzlichen Kosten führen. Ferner kann mittels dieser Kommunikation lediglich eine einzige vorbestimmte Messgröße, nämlich ein Temperaturwert, übertragen werden. Ferner muss der Topf passend über dem Reedkontakt der Kochstelle positioniert werden, damit das Kochsystem bestimmungsgemäß funktionieren kann.

Des Weiteren ist bekannt, den Boden von Kochgeschirren für die Verwendung auf Induktionskochfeldern aus einem besonderen ferromagnetischen Material zu fertigen, so dass ab einer vorbestimmbaren Temperatur des Kochgeschirrs die induktive Wirkung auf den Kochgeschirrboden signifikant abnimmt bzw. möglichst vollständig unterbleibt. Dieser Effekt ferromagnetischer Materialien wird als Curie-Temperatur bezeichnet, bei deren Erreichen die ferromagnetischen bzw. ferroelektrischen Eigenschaften eines Materials vollständig verschwunden sind, so dass das Material oberhalb der Curie-Temperatur nur noch paramagnetisch bzw. paraelektrisch wirkt. Hierdurch kann bei Erreichen einer Temperaturschwelle, welche durch die Wahl des Materials vorbestimmbar ist, eine weitere induktive Erwärmung des Kochgeschirrs sowie des Garguts vermieden werden.

Nachteilig ist hierbei jedoch, dass hierdurch lediglich eine einzige Temperatureinstellung des Kochgeschirrs vorgegeben werden kann. Ferner ist diese Temperatureinstellung prinzipbedingt die Einstellung einer maximalen oberen Temperatur. Ferner ist diese Temperaturschwelle konstruktiv unveränderbar durch das Kochgeschirr vorgegeben.

Der Erfindung stellt sich somit das Problem, ein Kochsystem der eingangs beschriebenen Art bereit zu stellen, so dass die Bedienung eines Kochfeldes bzw. einer Kochstelle einfacher und bzw. oder unauffälliger als bisher bekannt erfolgen kann. Insbesondere soll wenigstens ein Bedienelement eines Kochfeldes bzw. einer Kochstelle unauffälliger gestaltet werden oder vollständig verschwinden. Dies soll insbesondere für die Leistungseinstellung eines Kochfeldes bzw. einer Kochstelle ermöglicht werden. Hierbei ist vorzugsweise eine Fernwirkung zwischen Kochgeschirr und Kochfeld bzw. Kochstelle sicher auszuschließen. Zumindest soll eine alternative Möglichkeit zur Bedienung eines Kochfeldes bzw. einer Kochstelle bereitgestellt werden.

Erfindungsgemäß wird dieses Problem durch ein Kochsystem mit den Merkmalen des Patentanspruchs 1, durch ein Kochgeschirr mit den Merkmalen des Patentanspruchs 13, durch ein Induktionskochfeld mit den Merkmalen des Patentanspruchs 14 sowie durch ein Verfahren mit den Merkmalen des Patentanspruchs 15 gelöst. Vorteilhafte Ausgestaltungen und Weiterbildungen der Erfindung ergeben sich aus den nachfolgenden Unteransprüchen.

Die vorliegende Erfindung betrifft somit ein Kochsystem mit einem Induktionskochfeld mit wenigstens einer ersten Spuleneinheit und mit wenigstens einem Kochgeschirr, welches auf dem Induktionskochfeld oberhalb der ersten Spuleneinheit angeordnet ist. Das Kochgeschirr kann ein Kochtopf, eine Bratpfanne oder dergleichen sein. Das Kochgeschirr weist einen Kochgeschirrboden auf, welcher durch die erste Spuleneinheit induktiv erwärmbar ist. Die erste Spuleneinheit kann eine einzige Spule oder mehrere Spulen aufweisen. Die erste Spuleneinheit kann auch ein Bestandteil einer Spule sein.

Das erfindungsgemäße Kochsystem ist dadurch gekennzeichnet, dass der Kochgeschirrboden eine erste Bodenzone und eine zweite Bodenzone aufweist, Dabei ist die erste Bodenzone eine höhere induktive Leistungsaufnahmefähigkeit als die zweite Bodenzone aufweist. Hierunter ist die Eigenschaft bzw. Fähigkeit der jeweiligen Bodenzone zu verstehen, sich induktiv erwärmen zu lassen. Mit anderen Worten kann bei identischer induktiver Anregung über die erste Spuleneinheit des Induktionskochfeldes in der ersten Bodenzone eine größere Erwärmung bewirkt werden als über die gleiche induktive Anregung in der zweiten Bodenzone.

Die Bodenzone ist ein Abschnitt des Kochgeschirrbodens und kann auch als Kochzone bezeichnet werden. Dann weist der Kochgeschirrboden eine erste Kochzone und eine zweite Kochzone auf.

Der Umstand der unterschiedlichen Erwärmung kann erfindungsgemäß dahingehend genutzt werden, dass beim Betrieb des Induktionskochfeldes der Anteil der induktiven Wirkung der ersten Spuleneinheit, welcher auf die erste Bodenzone und welcher auf die zweite Bodenzone des Kochgeschirrbodens wirken kann, vom Benutzer durch die Positionierung und bzw. oder Orientierung des Kochgeschirrbodens gegenüber der ersten Spuleneinheit eingestellt werden kann. Hierbei wird die erste Spuleneinheit vorzugsweise mit einer konstanten elektrischen Leistungseinstellung, d.h. mit ein und derselben Leistungsstufe, betrieben.

Wird Positionierung und bzw. oder Orientierung des Kochgeschirrbodens gegenüber der ersten Spuleneinheit derart verändert, dass mehr Fläche der ersten Bodenzone über der ersten Spuleneinheit positioniert wird als von der zweiten Bodenzone, so wird aufgrund der höheren induktiven Leistungsaufnahmefähigkeit der ersten Bodenzone mehr elektrische Leistung der ersten Spuleneinheit induktiv umgesetzt und zur Erwärmung des Kochgeschirrbodens genutzt als zuvor. Wird andererseits der Kochgeschirrboden gegenüber der ersten Spuleneinheit derart bewegt, dass mehr Fläche der zweiten Bodenzone über der ersten Spuleneinheit positioniert wird als von der ersten Bodenzone, so wird aufgrund der geringeren induktiven Leistungsaufnahmefähigkeit der zweiten Bodenzone weniger elektrische Leistung der ersten Spuleneinheit induktiv umgesetzt und zur Erwärmung des Kochgeschirrbodens genutzt als zuvor.

Die erste Spuleneinheit kann dabei an wenigstens einen spulenfreien Bereich angrenzen, über dem die beiden Bodenzonen jeweils alternativ zur ersten Spuleneinheit positioniert werden können. Alternativ kann auch die erste Spuleneinheit Bereiche aufweisen, die durch einen teilweise größeren Abstand zum Geschirrboden zu Bereichen unterschiedlicher Leistungsaufnahmen im Kochgeschirr führen. Alternativ kann auch wenigstens eine zweite Spuleneinheit an der ersten Spuleneinheit angrenzend angeordnet sein, über denen die beiden Bodenzonen des Kochgeschirrbodens jeweils alternativ zur ersten Spuleneinheit positioniert werden können. Die erste Spuleneinheit und die zweite Spuleneinheit können zu separaten Spulen gehören bzw. diese bilden. Die erste Spuleneinheit und die zweite Spuleneinheit können auch gemeinsam eine Spule bilden.

Auf diese Weise kann eine Einstellung der im Kochgeschirrboden wirksamen Induktion, welche von der ersten Spuleneinheit ausgehen kann, durch den Benutzer vorgenommen werden, indem einfach das Kochgeschirr bzw. der Kochgeschirrboden auf dem Induktionskochfeld durch Drehen und bzw. oder Verschieben bewegt wird. Somit kann zumindest für die Kochstelle, zu der die erste Spuleneinheit zuzuordnen ist, eine Einstellung der induktiven Leistung erfolgen, ohne dass hierfür Bedienelemente der Kochstelle bzw. des Induktionskochfeldes verwendet bzw. hierfür vorhanden sein müssen. Mit anderen Worten kann eine direkte Bedienung der Kochstelle bzw. des Induktionskochfeldes durch das Kochgeschirr bzw. am Kochgeschirr erfolgen. Dies kann zumindest für die Leistungseinstellung der Kochstelle bzw. des Induktionskochfeldes vorgenommen werden. Dies kann die Bedienung einfacher, schneller und intuitiver gestalten als bisher bekannt. Insbesondere kann auf optische sichtbare Bedienelemente vollständig oder teilweise verzichtet werden. Ferner kann ein innovatives Bedienkonzept, zumindest zur Leistungsregulierung und bzw. oder zur Temperaturregulierung, geschaffen werden.

Die mit der Erfindung erreichbaren Vorteile bestehen ferner darin, dass auf diese Weise eine normgerechte Bedienung einer Kochstelle bzw. eines Induktionskochfeldes erreicht werden kann, da eine Fernwirkung sicher ausgeschlossen werden kann.

Vorteilhaft ist auch, dass der Benutzer weder seinen Blick noch seine Hände vom Kochgeschirr nehmen muss, um eine Bedienung des Kochprozesses vorzunehmen. Somit kann ein Fokuswechsel des Benutzers zwischen zu bedienendem Kochgeschirr und Bedienelement der Kochstelle bzw. des Induktionskochfeldes vermieden werden.

Eine derartige Veränderung der Leistungseinstellung kann beispielsweise mittels einer Drehbewegung des Kochgeschirrs erfolgen, wodurch die Orientierung der ersten Bodenzone zu der ersten Spuleneinheit verändert wird. Um dieses zu ermöglichen deckt die erste Spuleneinheit nur einen Teil der Kreisfläche der Kochstelle ab. Beispielsweise kann die erste Spuleneinheit so ausgestaltet sein, dass diese weniger als 70 Prozent der Kreisfläche der Kochstelle abdeckt.

Besteht die erste Spuleneinheit aus mehreren Spulenelementen, so sind diese bevorzugt gleichmäßig über die Fläche der Kochstelle verteilt. Gemäß dem vorstehend genannten Beispiel in Form von Segmenten mit gleichmäßigem Abstand zueinander über den Kreisumfang der Kochstelle verteilt.

Vorteilhaft ist weiterhin, dass am Kochgeschirr keinerlei Elektronik sowie Energiespeicher wie z.B. Batterien erforderlich sind. Somit kann die erfindungsgemäße Bedienung für spülmaschinenfestes Kochgeschirr umgesetzt werden.

Gemäß einem Aspekt der vorliegenden Erfindung weist das Induktionskochfeld ferner eine zweite Spuleneinheit auf, so dass der Kochgeschirrboden ferner durch die zweite Spuleneinheit induktiv erwärmbar ist, wobei die erste Spuleneinheit und die zweite Spuleneinheit angeordnet und ausgebildet sind, so dass die erste Spuleneinheit eine stärkere Induktion als die zweite Spuleneinheit in dem Kochgeschirrboden erzeugen kann. Mit anderen Worten kann der Kochgeschirrboden über zwei Spuleneinheiten mit unterschiedlich starken induktiven Wirkungen bewegt werden. Vorzugsweise bilden die beiden Spuleneinheiten dabei gemeinsam eine Spule.

Auch hierdurch kann eine Leistungssteuerung der induktiven Erwärmung wie zuvor beschrieben erfolgen, wobei gemäß dem vorliegenden Aspekt bei Betrieb der Kochstelle bzw. des Induktionskochfeldes stets eine induktive Anregung in Richtung des Kochgeschirrbodens vorhanden ist, jedoch je nach Spuleneinheit in unterschiedlicher Stärke. Hierdurch kann eine gleichmäßigere induktive Erwärmung des Kochgeschirrbodens erfolgen, wobei gleichzeitig weiterhin eine erfindungsgemäße Leistungssteuerung erfolgen kann.

Gemäß einem weiteren Aspekt der vorliegenden Erfindung ist die zweite Spuleneinheit in der Höhe weiter zum Kochgeschirrboden beabstandet angeordnet als die erste Spuleneinheit. Dies kann beispielsweise durch einen Abstandhalter zwischen der Oberseite der zweiten Spuleneinheit und der Glaskeramik des Induktionskochfeldes erfolgen, so dass dieser Abstand definiert eingehalten werden kann. Für den Abstandhalter kann vorzugsweise ein paramagnetisches oder insbesondere ein diamagnetisches Material verwendet werden. Bilden die beiden Spuleneinheiten dabei vorzugsweise eine gemeinsame Spule, so ist die erste Spuleneinheit näher zum Kochgeschirrboden angeordnet als die zweite Spuleneinheit.

Diesem Aspekt der vorliegenden Erfindung liegt die Erkenntnis zugrunde, dass die Leistungsübertragung bei Induktionskochfeldern neben z.B. der Frequenz, dem Strom und dem Material des Kochgeschirrs auch vom Abstand zwischen den Kochgeschirrboden und der Spule bzw. den Spuleneinheiten in der Höhe abhängt. Je größer der Abstand ist, desto geringer ist die induktiv von der Spule bzw. den Spuleneinheiten in den Kochgeschirrboden eingekoppelte Leistung. Hierbei kann davon ausgegangen werden, dass üblicherweise die Spulen von Induktionskochfeldern planar, d.h. flach in der horizontalen Ebene, aufgebaut sind. Ferner entspricht üblicherweise die Bauhöhe dieser Spulen der Höhe der verwendeten Litzen. Es sind runde, ovale oder annähernd eckige Grundformen von Spulen bekannt.

Werden somit zwei insbesondere identische bzw. baugleiche Spuleneinheiten, insbesondere derselben Spule, in der Höhe unterschiedlich weit von der Glaskeramik bzw. dem Kochgeschirrboden angeordnet und mit gleicher elektrischer Leistung versorgt, so geht zwar von beiden Spuleneinheiten eine vergleichbare induktive Anregung aus, es werden jedoch aufgrund der unterschiedlichen Abstands zum Kochgeschirrboden unterschiedlich starke induktive Erwärmungen im Kochgeschirrboden erreicht. Dies kann sich zur erfindungsgemäßen Bedienung des Kochgeschirrs zu Nutze gemacht werden, wie zuvor beschrieben.

Gemäß einem weiteren Aspekt der vorliegenden Erfindung weist die erste Bodenzone eine höhere magnetische Permeabilität als die zweite Bodenzone auf. Auf diese Weise können die unterschiedlichen induktiven Leistungsaufnahmefähigkeiten der beiden Bodenzonen einfach, verlässlich und reproduzierbar umgesetzt werden. Es können beispielsweise unterschiedliche ferromagnetische Materialien für die beiden Bodenzonen des Kochgeschirrbodens verwendet werden. Alternativ kann für die erste Bodenzone ein ferromagnetisches Material und für die zweite Bodenzone ein nicht-ferromagnetisches Material verwendet werden. Auch ist es möglich für die erste Bodenzone ein ferromagnetisches Material mit einer vorbestimmten Curie-Temperatur unterhalb 350 °C zu verwenden und für die zweite Bodenzone ein anderes ferromagnetisches Material mit einer vom ferromagnetischen Material der ersten Bodenzone abweichenden vorbestimmten Curie-Temperatur unterhalb 350 °C zu verwenden.

Gemäß einem weiteren Aspekt der vorliegenden Erfindung weist die erste Bodenzone ein ferromagnetisches Material und die zweite Bodenzone ein paramagnetisches oder diamagnetisches Material auf. Hierdurch können die unterschiedlichen induktiven Leistungsaufnahmefähigkeiten der beiden Bodenzonen einfach, verlässlich und reproduzierbar umgesetzt werden.

Gemäß einem weiteren Aspekt der vorliegenden Erfindung weist die erste Bodenzone ein ferromagnetisches Material mit einer vorbestimmten Curie-Temperatur unterhalb 350 °C auf. Auf diese Weise kann der Effekt ferromagnetischer Materialien, ab Erreichen ihrer individuellen Curie-Temperatur keine weitere induktive Erwärmung zuzulassen, verwendet werden, um eine maximal zulässige induktive Erwärmung der ersten Bodenzone vorzugeben. Hierdurch kann beispielsweise eine unzulässige Erwärmung, welche zu Sicherheitsgefährdungen führen oder zumindest das Gargut schädigen könnte, durch die Konstruktion des Kochgeschirrs verhindern werden. Auch kann z.B. bei einem Milchkochtopf neben der erfindungsgemäßen Einstellbarkeit der Leistungsaufnahme zusätzlich ein Erreichen einer Temperatur, bei welcher die Milch im Kochtopf anbrennen könnte, vermieden werden.

Gemäß einem weiteren Aspekt der vorliegenden Erfindung weist die zweite Bodenzone ein ferromagnetisches Material mit einer vorbestimmten Curie-Temperatur unterhalb von 350 °C auf. Hierdurch kann für die zweite Bodenzone, welche aufgrund ihrer geringeren induktiven Leistungsaufnahmefähigkeit eher der Regulierung der resultierenden induktiven Leistungsaufnahme des Kochtopfbodens als der Erwärmung des Kochtopfbodens dient, ein Temperaturbereich vorgegeben werden, bis zu dessen Grenztemperatur eine signifikante induktive Erwärmung der zweiten Bodenzone möglich sein kann. Erst ab Erreichen dieser Grenztemperatur wird eine signifikante induktive Erwärmung der zweiten Bodenzone verhindert, so dass ab dieser Grenztemperatur die zweite Bodenzone ihre zuvor beschrieben Funktion, der Steuerung der Leistungsaufnahme zu dienen, ausüben kann. Auf diese Weise kann auch die zweite Bodenzone des Kochgeschirrbodens zu Beginn des Betriebes zur Erwärmung des Garguts verwendet werden, um dies zu beschleunigen.

Gemäß einem weiteren Aspekt der vorliegenden Erfindung weist der Kochgeschirrboden eine mehrlagige Struktur, vorzugsweise eine Sandwich-Struktur, auf, wobei vorzugsweise wenigstens eine Schicht der Struktur Kupfer, Aluminium oder Graphit aufweist. Die mehrlagige Struktur weist wenigstens zwei Schichten, welche auch als Doppellage bezeichnet werden können, auf. Es können jedoch auch mehr als zwei Schichten vorhanden sein. Vorteilhaft ist hierbei, dass verschiedenen Materialeigenschaften wie z.B. sehr Beständigkeit für eine äußere Schicht mit sehr guter Temperaturleitfähigkeit und bzw. oder hoher ferromagnetischer Eigenschaft kombiniert eingesetzt werden können.

Unter einer Sandwich-Struktur wird ein Verbundwerkstoff mit drei Schichten verstanden, wobei die beiden Außenschichten ein identisches Material aufweisen, welches sich vom Material der dazwischenliegenden Innenschicht unterscheidet. Hierdurch kann beispielsweise ein Material mit sehr guter Temperaturleitfähigkeit und bzw. oder hoher ferromagnetischer Eigenschaft als Innenschicht von zwei vergleichsweise widerstandsfähigen und robusten Außenschichten geschützt werden.

Dabei kann vorzugsweise durch die Wahl der Materialien Kupfer, Aluminium oder Graphit für die beiden Außenschichten oder die Innenschicht ein vergleichsweise gut wärmeleitender Kochgeschirrboden geschaffen werden.

Dies ist vorteilhaft, da erfindungsgemäß nicht der gesamte Kochgeschirrboden erwärmt werden kann. Wird daher ein vergleichsweise gut wärmeleitender Kochgeschirrboden vorgesehen, so kann sich die induktiv erzeugte Wärme von der ersten Bodenzone möglichst schnell in die zweite Bodenzone ausbreiten, so dass ein gleichmäßig erwärmter Kochgeschirrboden bewirkt werden kann, und dies möglichst schnell. Dies gilt ebenso für eine Abkühlung des Kochgeschirrbodens bei einer Reduzierung der induktiven Leistung.

Gemäß einem weiteren Aspekt der vorliegenden Erfindung weist das Kochgeschirr wenigstens eine für einen Benutzer sichtbare Markierung und das Induktionskochfeld wenigstens eine für den Benutzer sichtbare Referenzmarkierung auf, oder umgekehrt, welche angeordnet sind, dem Benutzer die Positionierung und bzw. oder Orientierung der Bodenzonen gegenüber der ersten Spuleneinheit und bzw. oder gegenüber der zweiten Spuleneinheit anzuzeigen.

Es können auch mehrere Markierungen vorhanden sein, welche unterschiedliche Anzeigefunktionen oder eine gemeinsame Anzeigefunktion ausüben können. Als Markierungen können beispielsweise Beschriftungen mit z.B. Buchstaben, Zahlen, Pfeilen, Strichen oder sonstigen geometrischen Formen sowie Kombinationen hieraus verwendet werden. Diese können z.B. auf die äußere Oberfläche des Kochgeschirrs bzw. des Induktionskochfeldes bzw. dessen Kochstelle aufgedruckt, eingeprägt, aufgetragen, ausgenommen oder dergleichen sein.

Die Markierung des Kochgeschirrs ist hierzu vorzugsweise auf der äußeren Oberfläche des Kochgeschirrs wie beispielsweise auf dem Kochgeschirrkörper, seitlich am Kochgeschirrboden, am Henkel oder Griff des Kochgeschirrs oder am Kochgeschirrdeckel angeordnet. Das Induktionskochfeld bzw. dessen Kochstelle weist eine korrespondierende Markierung oder eine Mehrzahl von Markierungen als Referenz auf, so dass durch die relative Positionierung und bzw. oder Orientierung der Markierungen von Kochgeschirr und Induktionskochfeld bzw. Kochstelle zueinander eine entsprechende Positionierung und bzw. oder Orientierung der Bodenzonen gegenüber der ersten Spuleneinheit und bzw. oder gegenüber der zweiten Spuleneinheit dem Benutzer angezeigt werden kann. Hierdurch kann dem Benutzer z.B. eine gewählte Leistungsstufe des Induktionskochfeldes bzw. der Kochstelle angezeigt werden.

Beispielsweise kann der Mantel des Kochgeschirrkörpers eine Mehrzahl von Zahlen aufweisen, welche den wählbaren Leistungsstufen entsprechen, und das Induktionskochfeld bzw. die Kochstelle kann einen Pfeil als Markierung aufweisen. Wird nun das Kochgeschirr auf dem Induktionskochfeld bzw. auf der Kochstelle um seine Hochachse in Umfangsrichtung gedreht, ändert sich die Überdeckung der Bodenzonen des Kochgeschirrs gegenüber der ersten Spuleneinheit und ggfs. gegenüber der zweiten Spuleneinheit. Die auf diese Weise vom Benutzer eingestellte Leistungsstufe kann durch die Zahl auf dem Kochgeschirr angezeigt werden, auf welche der Pfeil des Induktionskochfeldes bzw. der Kochstelle zeigt.

Gemäß einem weiteren Aspekt der vorliegenden Erfindung weist die erste Bodenzone und die zweite Bodenzone jeweils eine Mehrzahl von Bodenzonenelementen auf und die erste Spuleneinheit, vorzugsweise ferner die zweite Spuleneinheit, weist bzw. weisen eine korrespondierende Mehrzahl von entsprechenden Spulenelementen auf. Mit anderen Worten werden die Bodenzonen und die erste Spuleneinheit bzw. beide Spuleneinheiten in entsprechende einzelnen Elemente aufgeteilt, welche in der horizontalen Ebene, wo Bodenzonen und Spuleneinheit bzw. Spuleneinheiten einander gegenüber liegen können, verteilt angeordnet sind, vorzugsweise gleichmäßig verteilt. Hierdurch kann eine gleichmäßige Erwärmung des Kochgeschirrbodens erreicht werden.

Gemäß einem weiteren Aspekt der vorliegenden Erfindung ist der Kochgeschirrboden kreisförmig ausgebildet und die Bodenzonenelemente der ersten Bodenzone sind, vorzugsweise in Umfangrichtung mit den Bodenzonenelementen der zweiten Bodenzone abwechselnd nebeneinander angeordnet. Hierdurch kann ein Kochgeschirrboden eines kreisförmigen Kochtopfes oder dergleichen geschaffen werden, welcher aus tortenstückartigen Segmenten von Bodenzonen besteht, welche sich in Umfangsrichtung abwechseln. Hierdurch kann eine gleichmäßige Erwärmung eines kreisförmigen Kochgeschirrbodens erreicht werden.

Gemäß einem weiteren Aspekt der vorliegenden Erfindung bilden die erste Spuleneinheit und die zweite Spuleneinheit eine kreisförmige Kochstelle und die Spulenelemente der ersten Spuleneinheit sind, vorzugsweise in Umfangrichtung mit den Spulenelementen der zweiten Spuleneinheit abwechselnd nebeneinander angeordnet. Hierdurch kann ein Induktionskochfeld bzw. eine Kochstelle geschaffen werden, welche für einen kreisförmigen Kochgeschirrboden z.B. eines Kochtopfes ausgelegt ist und diesen möglichst gut und gleichzeitig energieeffizient erwärmen kann. Gleichzeitig kann eine gleichmäßige Erwärmung eines kreisförmigen Kochgeschirrbodens erreicht werden.

Die unterschiedlichen Bodenzonenelemente und/oder die verschiedenen Spulenelemente können auch entlang wenigstens einer geraden Ausdehnung nebeneinander angeordnet sein.

Unter einer Anordnung nebeneinander ist zu verstehen, dass in unmittelbarer Nachbarschaft unterschiedliche Bodenzonenelemente und/oder verschiedenen Spulenelemente vorgesehen sind. Beispielsweise in Form eines Streifenmusters oder eines Schachbrettmusters. Bevorzugt wird jedoch die Ausbildung der unterschiedlichen Bodenzonenelemente und/oder der verschiedenen Spulenelemente nebeneinander in Umfangsrichtung, also in der Art von Kreissegmenten, umgangssprachlich Tortenstücke.

Vorzugsweise ist vorgesehen, dass bei den unterschiedlichen Bodenzonenelementen und/oder den verschiedenen Spulenelementen nur jeweils zwei Varianten zur Anwendung kommen, welche dann alternierend nebeneinander angeordnet sind. Es ist jedoch nicht ausgeschlossen mehr als nur zwei Varianten vorzusehen.

In diesem Zusammenhang ist eine zu den Bodenzonenelementen eine korrespondierende Mehrzahl entsprechender Spulenelementen so zu verstehen, dass die Anzahl der jeweiligen Elemente identisch ist. Des Weiteren kann verstanden werden, dass die Verteilung über die Fläche des Gargeschirrbodens und über die Fläche der Kochstelle eine ähnliche Ordnung aufweist. Beispielsweise beides Segmente oder Steifen, insbesondere mit einem vergleichbaren Abstandsmaß,

Die vorliegende Erfindung betrifft auch ein Kochgeschirr zur Verwendung bei einem Kochsystem wie zuvor beschrieben, wobei das Kochgeschirr einen Kochgeschirrboden aufweist, welcher zumindest abschnittweise durch eine erste Spuleneinheit eines Induktionskochfeldes induktiv erwärmbar ist, wobei der Kochgeschirrboden des Kochgeschirrs eine erste Bodenzone und eine zweite Bodenzone aufweist, wobei die erste Bodenzone eine höhere induktive Leistungsaufnahmefähigkeit als die zweite Bodenzone aufweist. Mittels eines derartigen Kochgeschirrs können die zuvor beschriebenen Eigenschaften und Vorteile eines erfindungsgemäßen Kochsystems umgesetzt werden.

Die vorliegende Erfindung betrifft auch ein Induktionskochfeld zur Verwendung bei einem Kochsystem wie zuvor beschrieben mit wenigstens einer ersten Spuleneinheit, welche ausgebildet und angeordnet ist, einen Kochgeschirrboden eines Kochgeschirrs, welches auf dem Induktionskochfeld oberhalb der ersten Spuleneinheit angeordnet ist, zumindest abschnittweise induktiv zu erwärmen. Mittels eines derartigen Induktionskochfeldes können die zuvor beschriebenen Eigenschaften und Vorteile eines erfindungsgemäßen Kochsystems umgesetzt werden.

Die vorliegende Erfindung betrifft auch ein Verfahren zur Bedienung eines Kochsystems wie zuvor beschrieben mit dem Schritt:
- Verändern der Positionierung und bzw. oder Orientierung eines Kochgeschirrbodens eines Kochgeschirrs gegenüber wenigstens einer ersten Spuleneinheit eines Induktionskochfeldes derart, so dass wenigstens von einer ersten Bodenzone des Kochgeschirrbodens eine geringere oder größere induktive Leistung aufgenommen werden kann als zuvor.

Auf diese Weise kann eine Veränderung der Leistungsaufnahme des Kochgeschirrs erreicht werden, ohne dass hierzu die Leistungseinstellung des Induktionskochfeldes verändert werden muss. Somit kann auf bisher hierzu erforderliche Bedienelemente des Induktionskochfeldes bzw. dessen Kochstelle verzichtet werden. Die Leistungseinstellung bzw. die Leistungsstufe der ersten Spuleneinheit bleibt hierbei vorzugsweise konstant.

Drei Ausführungsbeispiele der Erfindung sind in den Zeichnungen rein schematisch dargestellt und werden nachfolgend näher beschrieben. Es zeigt
- Figur 1: ein Induktionskochfeld von oben;
- Figur 2: die Darstellung der Figur 1 von der Seite;
- Figur 3: eine perspektivische Darstellung eines Kochgeschirrs auf einem Induktionskochfeld gemäß der Figuren 1 und 2;
- Figur 4: eine Darstellung des Kochgeschirrbodens des Kochgeschirrs der Figur 3;
- Figur 5: eine Darstellung von sich überlagerndem Kochgeschirr und Induktionskochfeld gemäß einem ersten Ausführungsbeispiel in einer ersten Drehstellung;
- Figur 6: die Anordnung der Figur 5 in einer zweiten Drehstellung;
- Figur 7: eine Darstellung von sich überlagerndem Kochgeschirr und Induktionskochfeld gemäß einem zweiten Ausführungsbeispiel in einer ersten Drehstellung;
- Figur 8: die Anordnung der Figur 7 in einer zweiten Drehstellung;
- Figur 9: eine Darstellung von sich überlagerndem Kochgeschirr und Induktionskochfeld gemäß einem dritten Ausführungsbeispiel in einer ersten Drehstellung; und
- Figur 10: die Anordnung der Figur 9 in einer zweiten Drehstellung.

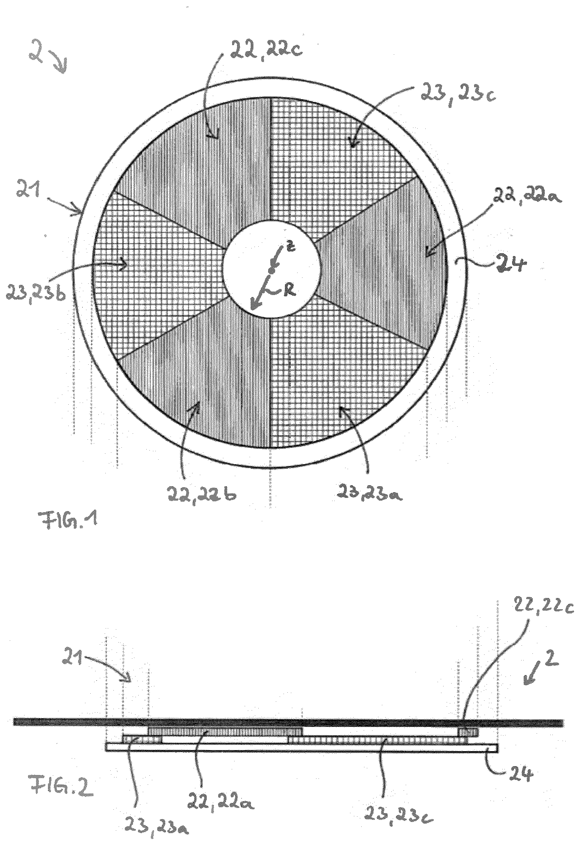

Figur 1 zeigt ein Induktionskochfeld 2 von oben. Figur 2 zeigt die Darstellung der Figur 1 von der Seite.

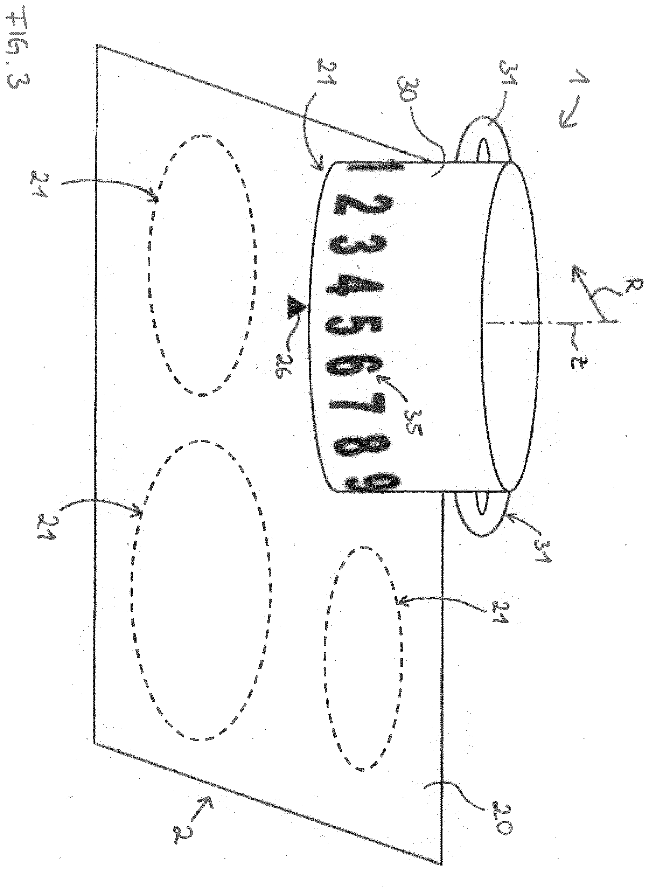

Das Induktionskochfeld 2 weist eine kreisrunde Kochstelle 21 mit einer ersten Spuleneinheit 22 und einer zweiten Spuleneinheit 23 auf, welche auf einem Spulenträger 24 angeordnet sind. Auf der dem Spulenträger 24 abgewandten Seite der beiden Spuleneinheiten 22, 23 befindet sich eine Glaskeramik 20 des Induktionskochfeldes 2, auf der ein Kochgeschirr 3 auf der Kochstelle 21 angeordnet werden kann, siehe z.B. Figur 3. Die erste Spuleneinheit 22 besteht aus drei Spulenelementen 22a-22c, welche in der Höhe Z, in der radialen Richtung R sowie in Umfangsrichtung U in einem Winkel von ca. 60° gleich dimensioniert sind und gemeinsam die erste Spuleneinheit 22 bilden. Entsprechendes gilt für die zweite Spuleneinheit 23 bzw. deren Spulenelemente 23a-23c. Die Spulenelemente 22a-22c, 23a-23c bzw. die beiden Spuleneinheiten 22, 23 sind in Umfangsrichtung U abwechselnd angeordnet und bilden gemeinsam die Spule der Kochstelle 21.

Die Spulenelemente 22a-22c, 23a-23c bzw. die beiden Spuleneinheiten 22, 23 sind auf unterschiedlichen Höhen Z bzw. mit unterschiedlichem Abstand in der Höhe Z zur Glaskeramik 20 gewickelt. Hierdurch ist die erste Spuleneinheit 22 näher unterhalb der Glaskeramik 20 und damit näher zum Kochgeschirrboden 32 eines auf der Kochstelle 21 befindlichen Kochgeschirrs 3 als die zweite Spuleneinheit 23 angeordnet. Bei gleicher Anregung der beiden Spuleneinheiten 22, 23 wird somit oberhalb der ersten Spuleneinheit 22 eine stärkere Induktion als oberhalb der zweiten Spuleneinheit 23 erzeugt, welche einen größeren Abstand zur Glaskeramik 20 aufweist. Dieser Abstand von z.B. 3 bis 5 mm kann mittels Abstandhaltern vorgegeben sein, welche nicht induktiv anregbar sind (nicht dargestellt).

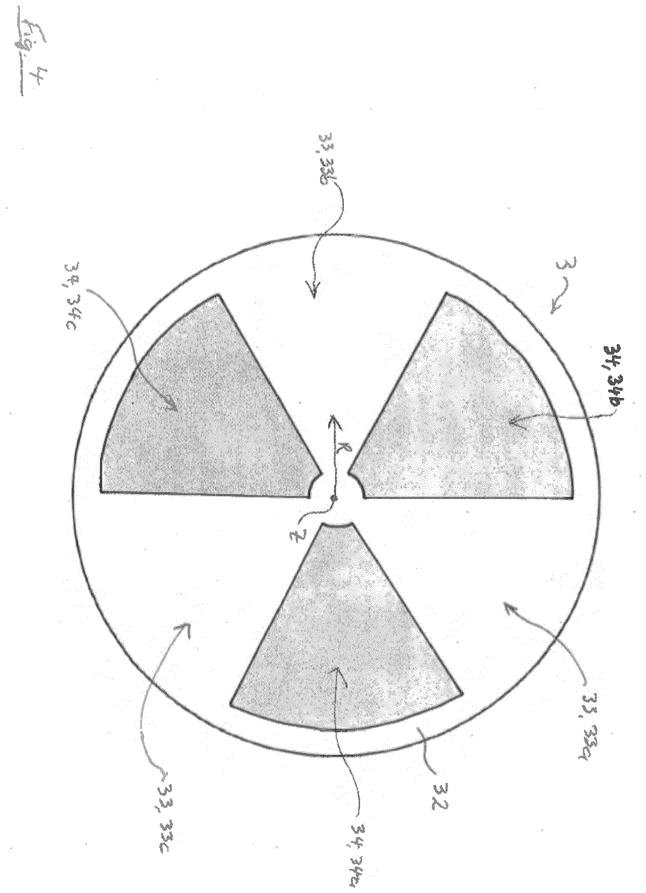

Figur 3 zeigt eine perspektivische Darstellung eines Kochgeschirrs 3 auf einem Induktionskochfeld 2 gemäß der Figuren 1 und 2. Figur 4 zeigt eine Darstellung des Kochgeschirrbodens 32 des Kochgeschirrs 3 der Figur 3.

Das Kochgeschirr 3 ist ein Kochtopf 3 mit einem Kochgeschirrkörper 30, zwei sich radial gegenüberliegenden Kochgeschirrhenkeln 31, einem Kochgeschirrboden 32 sowie einem Kochgeschirrdeckel 36. Das Kochgeschirr 3 befindet sich auf der Kochstelle 21 des Induktionskochfeldes 2 der Figuren 1 und 2. Das Kochgeschirr 3 und das Induktionskochfeld 2 bilden zusammen ein Kochsystem 1.

Der Kochgeschirrboden 32 besteht im Wesentlichen aus einer ersten Bodenzone 33 und einer zweiten Bodenzone 34. Die erste Bodenzone 33 besteht aus drei Bodenzonenelementen 33a-33c, welche in der Höhe Z, in der radialen Richtung R sowie in Umfangsrichtung U gleich dimensioniert sind und gemeinsam die erste Bodenzone 33 bilden. Entsprechendes gilt für die zweite Bodenzone 34 bzw. deren Bodenzonenelemente 34a-34c. Die Bodenzonenelemente 33a-33c, 34a-34c sind in Umfangsrichtung U abwechselnd angeordnet und bilden gemeinsam zumindest im Wesentlichen den planen Kochgeschirrboden 32. Dabei sind die Bodenzonenelemente 33a-33c, 34a-34c in Umfangsrichtung U in einem Winkel von 60° ausgebildet und derart abwechselnd angeordnet, so dass die Kanten der Bodenzonenelemente 33a-33c, 34a-34c, welche in Umfangsrichtung U zeigen, miteinander abschließen, siehe z.B. Figur 4. Die Dimensionierung der Bodenzonenelemente 33a-33c, 34a-34c entspricht möglichst genau der Dimensionierung der Spulenelemente 22a-22c, 23a-23c.

Die erste Bodenzone weist eine höhere induktive Leistungsaufnahmefähigkeit als die zweite Bodenzone auf. Dies kann beispielsweise dadurch erreicht werden, dass die erste Bodenzone ein ferromagnetisches Material und die zweite Bodenzone ein nicht-ferromagnetisches Material wie z.B. ein diamagnetisches oder paramagnetisches Material aufweist. So kann das erfindungsgemäße Kochgeschirr 3 verwendet werden, um in Kombination mit beispielsweise dem Induktionskochfeld 2 der Figuren 1 und 2 eine Steuerung der Leistungsaufnahme des Kochgeschirrs 3 dadurch zu bewirken, dass z.B. durch Drehung des Kochgeschirrs 3 auf der Kochstelle 21 des Induktionskochfeldes 2 die Überlappung der beiden Spuleneinheiten 22, 23 mit den beiden Bodenzonen 33, 34 durch den Benutzer eingestellt werden kann. Mit anderen Worten kann hierdurch der effektive Abstand der beiden Bodenzonen 33, 34 zu den beiden Spuleneinheiten 22, 23 und damit die mögliche Leistungsaufnahme des Kochgeschirrs 3 durch den Benutzer eingestellt werden. Hierdurch kann auf entsprechende Bedienelemente des Induktionskochfeldes 2 bzw. der Kochstelle 21 verzichtet werden, ohne dass hierdurch eine Fernwirkung auftreten könnte.

Dabei weist der Kochgeschirrkörper 30 beispielsweise eine nach außen zeigende Markierung 35 in Form einer Zahlenreihe 35 von "1" bis "9" und die Glaskeramik 20 unmittelbar an der Kochstelle 21 eine Referenzmarkierung 26 in Form eines Dreiecks 26 auf, dessen Spitze zur Kochstelle 21 hin zeigt. Die Zahlenreihe 35 ist auf dem Kochgeschirr 3 und das Dreieck 26 auf der Glaskeramik 20 derart angeordnet, so dass bei entsprechender Drehstellung des Kochgeschirrs 3 auf der Kochstelle 21 eine Überlappung der beiden Spuleneinheiten 22, 23 mit den beiden Bodenzonen 33, 34 eingenommen wird, die eine Leistungsaufnahme im Kochgeschirr 3 bewirkt, die der Zahl der Zahlenreihe 35 entspricht, auf welche das Dreieck 26 zeigt.

Drei Ausführungsbeispiele derartiger Bedienungen werden nun wie folgt erläutert:

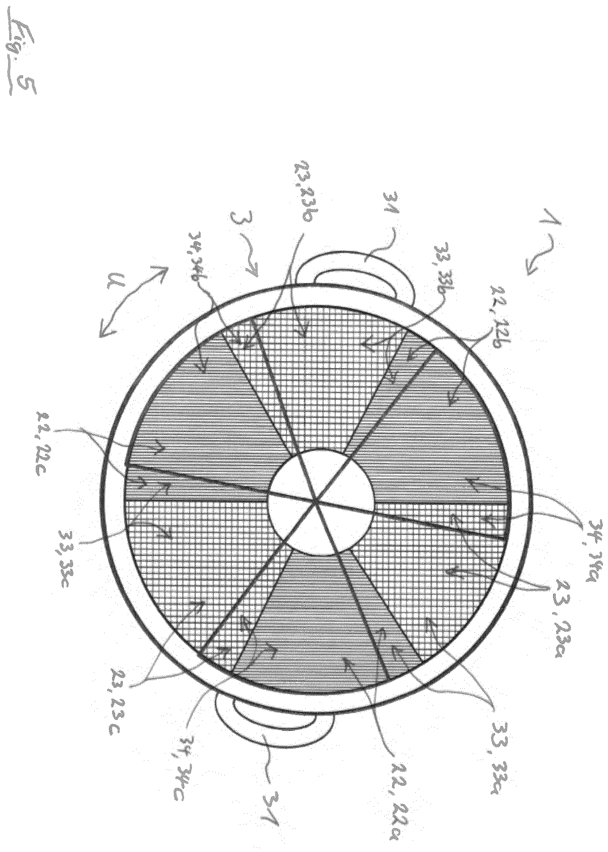

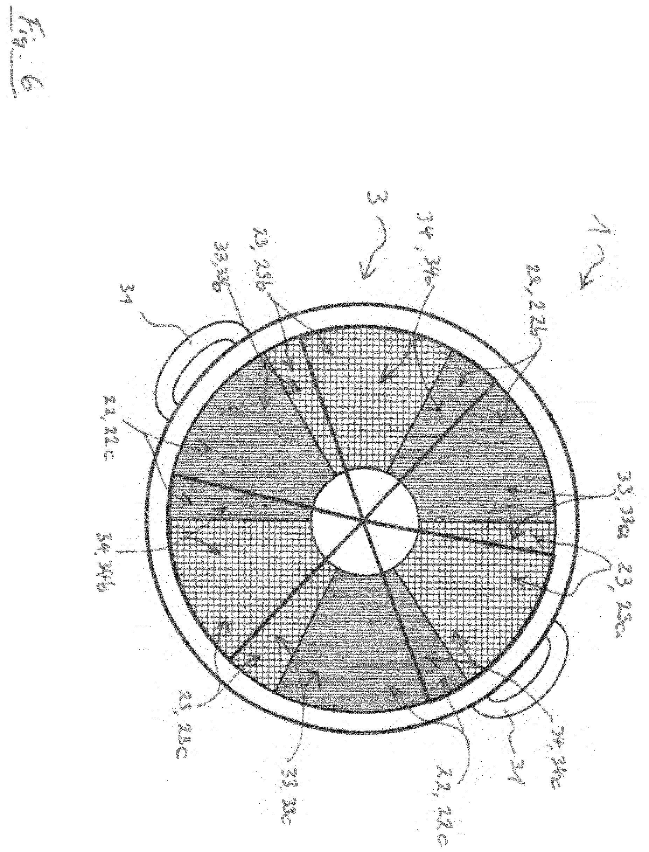

Figur 5 zeigt eine Darstellung von sich überlagerndem Kochgeschirr 3 und Induktionskochfeld 2 gemäß einem ersten Ausführungsbeispiel in einer ersten Drehstellung. Figur 6 zeigt die Anordnung der Figur 5 in einer zweiten Drehstellung.

In der ersten Drehstellung der Figur 5 überlappen sich im Wesentlichen die erste Spuleneinheit 22 der Spule des Induktionskochfeldes 2, dessen Spulenelemente 22a-22c in der Höhe Z näher unterhalb der Glaskeramik 20 angeordnet sind und damit eine stärkere Induktion erzeugen können, mit der zweiten Bodenzone 34 des Kochgeschirrs 3, dessen Bodenzonenelemente 34a-34c nicht-ferromagnetisch sind. Aufgrund der nichtferromagnetischen Eigenschaft der zweiten Bodenzone 34 wird die von der ersten Spuleneinheit 22 erzeugte Induktion schlecht bis gar nicht in der zweiten Bodenzone 34 in Wärme umgewandelt.

Ferner überlappen sich im Wesentlichen die zweite Spuleneinheit 23 der Spule des Induktionskochfeldes 2, dessen Spulenelemente 23a-23c in der Höhe Z weiter unterhalb der Glaskeramik 20 angeordnet sind und damit eine schwächere Induktion erzeugen können, mit der ersten Bodenzone 33 des Kochgeschirrs 3, dessen Bodenzonenelemente 33a-33c ferromagnetisch sind. Aufgrund der schwächeren Induktion der zweiten Spuleneinheit 23 wird eine vergleichsweise geringe Induktion und damit auch Erwärmung in der ersten Bodenzone 33 erzeugt.

Somit stellt die erste Drehstellung des Kochgeschirrs 3 gemäß der Figur 5 eine Einstellung dar, bei der eine vergleichsweise geringe Erwärmung des Kochgeschirrs 3 bewirkt wird, da in keinem der beiden Überlappungsbereichen eine starke induktive Erwärmung des Kochgeschirrbodens 32 bewirkt werden kann.

Wird nun das Kochgeschirr 3 durch einen Benutzer in Umfangsrichtung U um ca. 60° in die zweite Drehstellung der Figur 6 gedreht, so überlappen sich jetzt im Wesentlichen die erste Spuleneinheit 22 des Induktionskochfeldes 2, dessen Spulenelemente 22a-22c in der Höhe Z näher unterhalb der Glaskeramik 20 angeordnet sind und damit eine stärkere Induktion erzeugen können, mit der ersten Bodenzone 33 des Kochgeschirrs 3, dessen Bodenzonenelemente 33a-33c ferromagnetisch sind. Hierdurch wird die von der ersten Spuleneinheit 22 erzeugte Induktion sehr gut in der ersten Bodenzone 33 in Wärme umgewandelt.

Gleichzeitig überlappen sich im Wesentlichen die zweite Spuleneinheit 23 des Induktionskochfeldes 2, dessen Spulenelemente 23a-23c in der Höhe Z weiter unterhalb der Glaskeramik 20 angeordnet sind und damit eine schwächere Induktion erzeugen können, mit der zweiten Bodenzone 34 des Kochgeschirrs 3, dessen Bodenzonenelemente 34a-34c nicht-ferromagnetisch sind. Hierdurch wird kaum bis gar keine Induktion durch die zweite Spuleneinheit 23 in der zweiten Bodenzone 34 erzeugt.

Auf diese Weise stellt die zweite Drehstellung des Kochgeschirrs 3 gemäß der Figur 6 eine Einstellung dar, bei der eine vergleichsweise große Erwärmung des Kochgeschirrs 3 bewirkt wird, weil durch die Überlappung der ersten Spuleneinheit 22 mit der ersten Bodenzone 33 eine wirkungsvolle induktive Erwärmung des Kochgeschirrbodens 32 erreicht werden kann. Somit führt die Drehung des Kochgeschirrs 3 von der ersten Drehstellung der Figur 5 in die zweite Drehstellung der Figur 6 zu einer Erhöhung der Leistungsaufnahme im Kochgeschirr 3, welche trotz konstanter Leistung der beiden Spuleneinheiten 22, 23 als Leistungseinstellung des Induktionskochfeldes 2 bzw. dessen Kochstelle 21 angesehen werden kann.

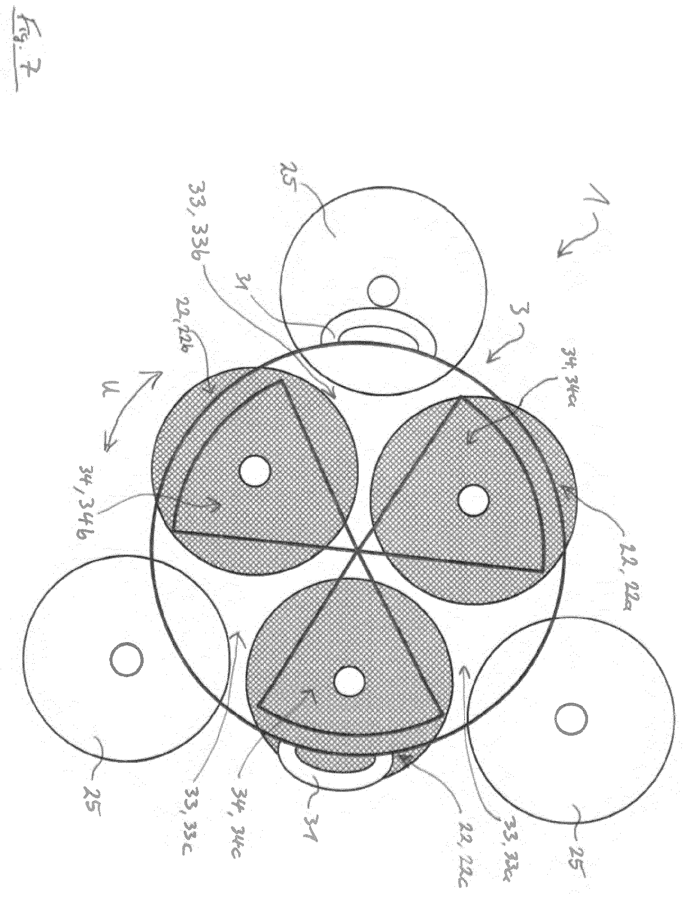

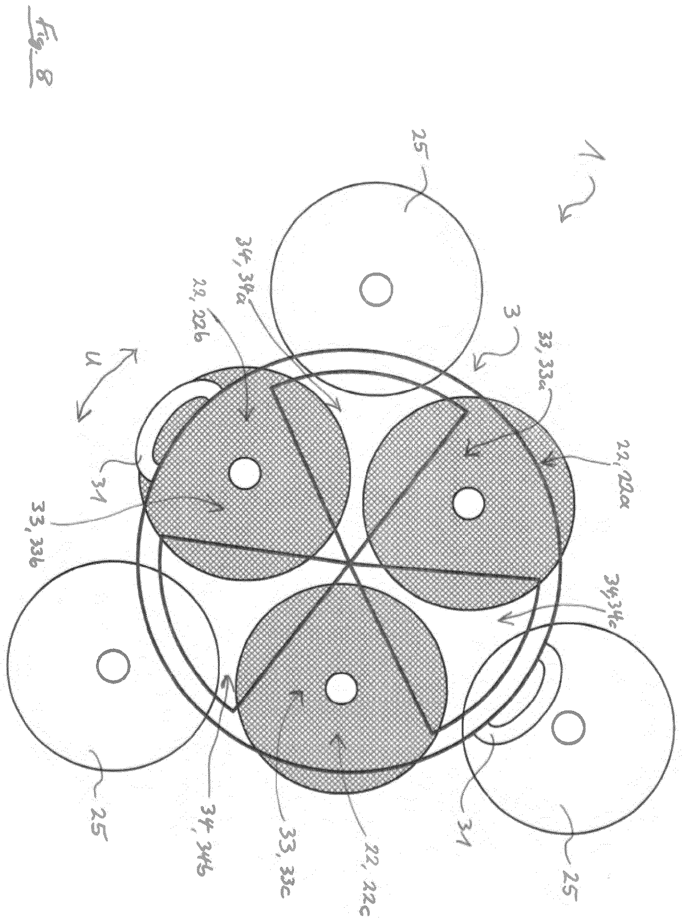

Figur 7 zeigt eine Darstellung von sich überlagerndem Kochgeschirr 3 und Induktionskochfeld 2 gemäß einem zweiten Ausführungsbeispiel in einer ersten Drehstellung. Figur 8 zeigt die Anordnung der Figur 7 in einer zweiten Drehstellung.

In diesem Fall werden die Spulenelemente 22a-22c der ersten Spuleneinheit 22 durch einzelne kreisförmige Spulen 22a-22c gebildet, welche mit weiteren Spulen 25 eine Vollflächenspulengeometrie bilden, bei der die Spulen 22a-22c, 25 derart angeordnet sind, dass sich eine hohe Packungsdichte ergibt. Zwischen den Spulen 22a-22c, 25 sind dabei Zwischenräume vorhanden, welche selbst gar keine Induktion erzeugen können. Die in diese Zwischenräume ausstrahlenden Magnetfeldlinien der induktiv gespeisten Spulen 22a-22c können zwar in den Zwischenräumen bzw. oberhalb der Zwischenräume im Kochgeschirr 3 eine induktive Wirkung erzeugen, jedoch wird diese stets deutlich schwächer sein als die induktive Wirkung direkt oberhalb der Spulen 22a-22c. Somit entsprechen diese Zwischenräume hinsichtlich ihrer schwächeren induktiven Leistung der zweiten Spuleneinheit 23 des ersten Ausführungsbeispiels.

Auf diese Weise lässt sich auch mit einer Vollflächenspulengeometrie eine Einstellung der Leistungsaufnahme in dem Kochgeschirr 3 dadurch bewirken, dass das Kochgeschirr 3 auf drei Spulen 22a-22c, welche gemeinsam die erste Spuleneinheit 22 bilden, angeordnet und zur Einstellung der Leistungsaufnahme in Umfangsrichtung U gedreht wird. So zeigt die Figur 7 eine Einstellung mit geringer induktiver Leistungsaufnahme durch das Kochgeschirr 3, da hier die zweite nicht-ferromagnetische Bodenzone 34 über der ersten Spuleneinheit 22 angeordnet ist, so dass hier lediglich eine sehr geringe induktive Erwärmung stattfinden kann. Dies gilt ebenso für die zweite ferromagnetische Bodenzone 33, welche oberhalb der spulenfreien Zwischenräume der Kochstelle 21 angeordnet ist.

Wird jedoch die zweite Drehstellung der Figur 8 durch Drehung in Umfangsrichtung U um ca. 60° eingenommen, so wird die erste ferromagnetische Bodenzone 34 über der ersten Spuleneinheit 22 angeordnet und es erfolgt eine wirkungsvolle induktive Erwärmung des Kochgeschirrbodens 32 im Bereich der ersten Bodenzone 34 und hierüber eine Erwärmung des Kochgeschirrbodens 32 als Ganzes. Die über den spulenfreien Zwischenräumen der Kochstelle 21 angeordnete zweite nicht-ferromagnetische Bodenzone 34 trägt zu dieser Erwärmung nicht bei.

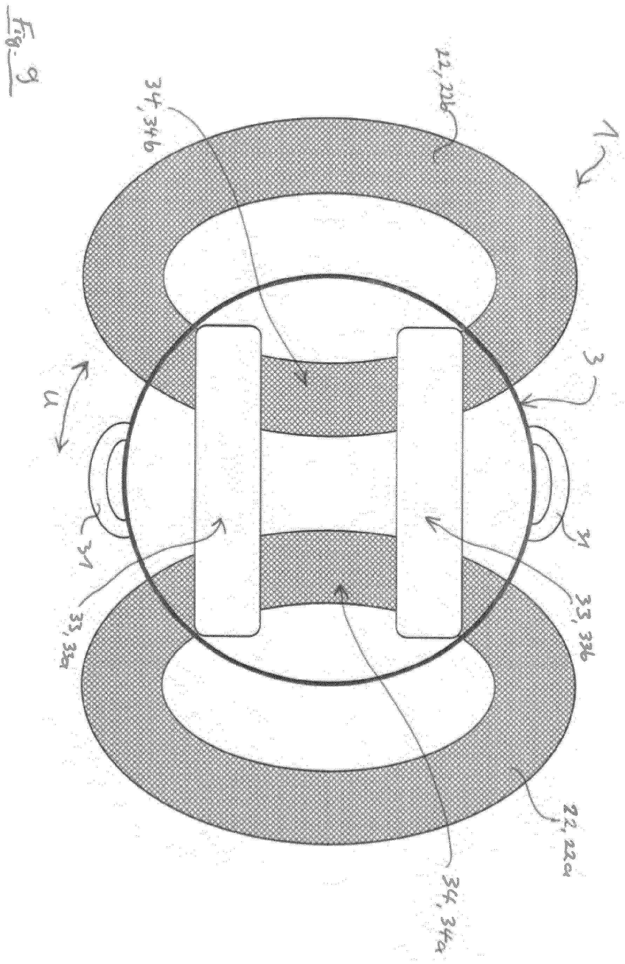

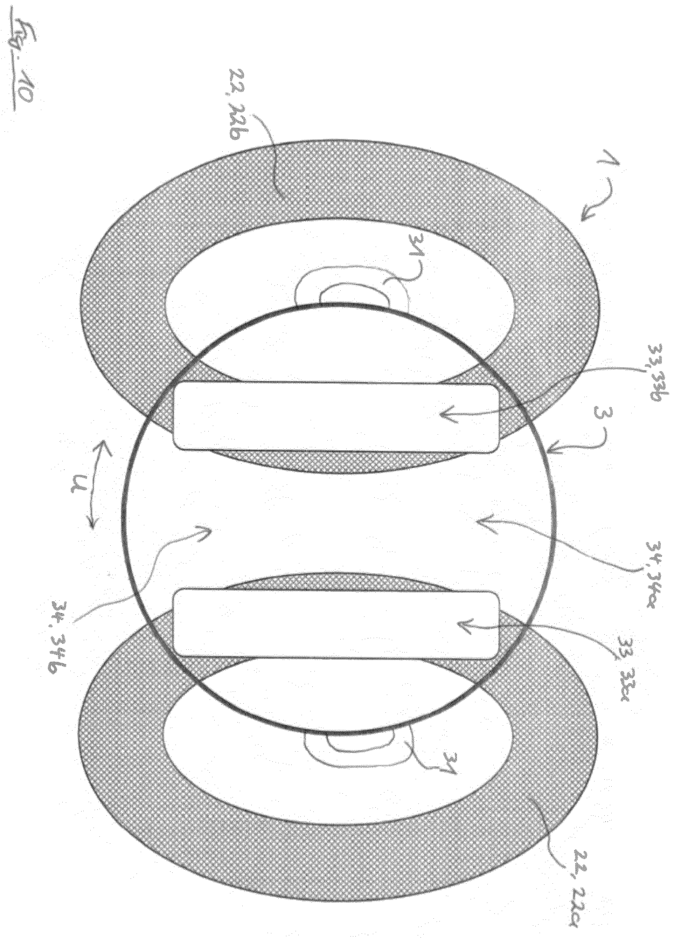

Figur 9 zeigt eine Darstellung von sich überlagerndem Kochgeschirr 3 und Induktionskochfeld 2 gemäß einem dritten Ausführungsbeispiel in einer ersten Drehstellung. Figur 10 zeigt die Anordnung der Figur 9 in einer zweiten Drehstellung.

In diesem Ausführungsbeispiel wird die erste Spuleneinheit 22 durch jeweils einen Teilbereich von zwei Okta-Spulenelementen 22a-22b gebildet, welche durch spulenfreie Zwischenräume zueinander beabstandet sind. Die zweite nicht-ferromagnetische Bodenzone 34 nimmt dabei im Wesentlichen den gesamten Kochgeschirrboden 32 ein. Die erste ferromagnetische Bodenzone 33 wird durch zwei längliche Bereiche gebildet.

Auch in diesem dritten Ausführungsbeispiel ergeben sich die gleichen Möglichkeiten zur Einstellung der Leistungsaufnahme wie zuvor beschrieben. So kann die erste Bodenzone 33 durch Drehung des Kochgeschirrs 3 in Umfangsrichtung U im Wesentlichen senkrecht zu den Bereichen der ersten Spuleneinheit 22 ausgerichtet werden, so dass nur noch ein Teil der ersten Bodenzone 33 über der ersten Spuleneinheit 22 angeordnet ist, siehe Figur 9. Hierdurch kann die Leistungsaufnahme des Kochgeschirrbodens 32 vergleichsweise gering eingestellt werden.

Wird nun das Kochgeschirr 3 in Umfangsrichtung U um ca. 90° gedreht, so wird die erste ferromagnetische Bodenzone 33 so weit wie möglich über der ersten Spuleneinheit 22 angeordnet. Hierdurch wird eine vergleichsweise hohe induktive Leistungsaufnahme im Kochgeschirrboden 32 erreicht, was zu einer entsprechend starken induktiven Erwärmung führen kann.

### Bezugszeichenliste (Bestandteil der Beschreibung)

- R: radiale Richtung, senkrecht zur Hochachse Z
- U: Umfangsrichtung um Hochachse Z herum
- Z: Höhe bzw. Hochachse

- 1: Kochsystem

- 2: Induktionskochfeld
- 20: Glaskeramik
- 21: Kochstelle
- 22: erste Spuleneinheit
- 22a-22c: Spulenelemente der ersten Spuleneinheit 22
- 23: zweite Spuleneinheit
- 23a-23c: Spulenelemente der zweiten Spuleneinheit 23
- 24: Spulenträger
- 25: weitere unbeteiligte Spulen
- 26: Referenzmarkierung, Dreieck

- 3: Kochgeschirr, Kochtopf
- 30: Kochgeschirrkörper
- 31: Kochgeschirrhenkel
- 32: Kochgeschirrboden
- 33: erste Bodenzone des Kochgeschirrbodens 32
- 33a-33c: Bodenzonnelemente der ersten Bodenzone 33
- 34: zweite Bodenzone des Kochgeschirrbodens 32
- 34a-34c: Bodenzonenelemente der zweiten Bodenzone 34
- 35: Markierung bzw. Beschriftung, Zahlenreihe
- 36: Kochgeschirrdeckel

## Patentansprüche

1. Kochsystem (1), mit
einem Induktionskochfeld (2) mit wenigstens einer ersten Spuleneinheit (22), und mit
wenigstens einem Kochgeschirr (3), welches auf dem Induktionskochfeld (2) oberhalb der ersten Spuleneinheit (22) angeordnet ist,
wobei das Kochgeschirr (3) einen Kochgeschirrboden (32) aufweist, welcher durch die erste Spuleneinheit (22) induktiv erwärmbar ist,
der Kochgeschirrboden (32) eine erste Bodenzone (33) und eine zweite Bodenzone (34) aufweist,
wobei die erste Bodenzone (33) eine höhere induktive Leistungsaufnahmefähigkeit als die zweite Bodenzone (34) aufweist,
**dadurch gekennzeichnet, dass**
die erste Bodenzone (33) und die zweite Bodenzone (34) jeweils eine Mehrzahl von Bodenzonenelementen (33a-c, 34a-c) aufweisen,
und zumindest die erste Spuleneinheit (22) eine, wenigstens zu den Bodenzonenelementen (33a-c) der ersten Bodenzone (33) korrespondierende Mehrzahl von entsprechenden Spulenelementen (22a-c) aufweist,
und wobei die Bodenzonenelemente (33a-c) der ersten Bodenzone (33) mit den Bodenzonenelementen (34a-c) der zweiten Bodenzone (34) abwechselnd nebeneinander angeordnet sind.

2. Kochsystem (1) gemäß Anspruch 1,
wobei das Induktionskochfeld (2) ferner eine zweite Spuleneinheit (23) aufweist, so dass der Kochgeschirrboden (32) ferner durch die zweite Spuleneinheit (23) induktiv erwärmbar ist,
wobei die erste Spuleneinheit (22) und die zweite Spuleneinheit (23) angeordnet und ausgebildet sind, so dass die erste Spuleneinheit (22) eine stärkere Induktion als die zweite Spuleneinheit (23) in dem Kochgeschirrboden (32) erzeugen kann.

3. Kochsystem (1) gemäß Anspruch 2,
wobei die zweite Spuleneinheit (23) in der Höhe (Z) weiter zum Kochgeschirrboden (32) beabstandet angeordnet ist als die erste Spuleneinheit (22).

4. Kochsystem (1) gemäß einem der vorherigen Ansprüche,
wobei die erste Bodenzone (33) eine höhere magnetische Permeabilität als die zweite Bodenzone (34) aufweist.

5. Kochsystem (1) gemäß einem der vorherigen Ansprüche,
wobei die erste Bodenzone (33) ein ferromagnetisches Material und die zweite Bodenzone (34) ein paramagnetisches oder diamagnetisches Material aufweist.

6. Kochsystem (1) gemäß einem der vorherigen Ansprüche,
wobei die erste Bodenzone (33) ein ferromagnetisches Material mit einer vorbestimmten Curie-Temperatur unterhalb 350 °C aufweist.

7. Kochsystem (1) gemäß einem der vorherigen Ansprüche,
wobei die zweite Bodenzone (34) ein ferromagnetisches Material mit einer vorbestimmten Curie-Temperatur unterhalb 350 °C aufweist.

8. Kochsystem (1) gemäß einem der vorherigen Ansprüche,
wobei das Kochgeschirr (3) wenigstens eine für einen Benutzer sichtbare Markierung (35) und das Induktionskochfeld (2) wenigstens eine für den Benutzer sichtbare Referenzmarkierung (26) aufweist, oder umgekehrt, welche angeordnet sind, dem Benutzer die Positionierung und/oder Orientierung der Bodenzonen (33, 34) gegenüber der ersten Spuleneinheit (22) und/oder gegenüber der zweiten Spuleneinheit (23) anzuzeigen.

9. Kochsystem (1) gemäß einem der vorherigen Ansprüche,
wobei die erste Bodenzone (33) und die zweite Bodenzone (34) jeweils eine Mehrzahl von Bodenzonenelementen (33a-c, 34a-c) aufweisen,
und/oder
wobei die erste Spuleneinheit (22), vorzugsweise ferner die zweite Spuleneinheit (23), eine korrespondierende Mehrzahl von entsprechenden Spulenelementen (22a-c, 23a-c) aufweist/aufweisen.

10. Kochsystem (1) gemäß Anspruch 9,
wobei der Kochgeschirrboden (32) kreisförmig ausgebildet ist, und
wobei die Bodenzonenelemente (33a-c) der ersten Bodenzone (33) in Umfangrichtung (U) mit den Bodenzonenelementen (34a-c) der zweiten Bodenzone (34) abwechselnd nebeneinander angeordnet sind,
und/oder
wobei die erste Spuleneinheit (22) und die zweite Spuleneinheit (23) eine kreisförmige Kochstelle (21) bilden, und
wobei die Spulenelemente (22a-c) der ersten Spuleneinheit (22) in Umfangrichtung (U) mit den Spulenelementen (23a-c) der zweiten Spuleneinheit (23) abwechselnd nebeneinander angeordnet sind.

11. Kochsystem (1) gemäß einem der vorherigen Ansprüche,
wobei das ferromagnetisches Material der ersten Bodenzone (33) eine andere vorbestimmte Curie-Temperatur aufweist als das ferromagnetische Material der zweiten Bodenzone (34).

12. Kochsystem (1) gemäß dem vorherigen Anspruch 11,
wobei das ferromagnetisches Material der ersten Bodenzone (33) und/oder das ferromagnetische Material der zweiten Bodenzone (34) eine Curie-Temperatur von kleiner 350 °C aufweist.

13. Kochgeschirr (3) zur Verwendung bei einem Kochsystem (1) gemäß einem der Ansprüche 1 bis 12,
wobei das Kochgeschirr (3) einen Kochgeschirrboden (32) aufweist, welcher zumindest abschnittweise durch eine erste Spuleneinheit (22) eines Induktionskochfeldes (2) induktiv erwärmbar ist,
wobei der Kochgeschirrboden (32) des Kochgeschirrs (3) eine erste Bodenzone (33) und eine zweite Bodenzone (34) aufweist,
wobei die erste Bodenzone (33) eine höhere induktive Leistungsaufnahmefähigkeit als die zweite Bodenzone (34) aufweist.

14. Induktionskochfeld (2) zur Verwendung bei einem Kochsystem (1) gemäß einem der Ansprüche 1 bis 12, mit
wenigstens einer ersten Spuleneinheit (22), welche ausgebildet und angeordnet ist, einen Kochgeschirrboden (32) eines Kochgeschirrs (3), welches auf dem Induktionskochfeld (2) oberhalb der ersten Spuleneinheit (22) angeordnet ist, zumindest abschnittweise induktiv zu erwärmen.

15. Verfahren zur Bedienung eines Kochsystems (1) gemäß einem der Ansprüche 1 bis 12, mit dem Schritt:
Verändern der Positionierung der ersten Bodenzone (33) und der zweiten Bodenzone (34) eines Kochgeschirrbodens (32) eines Kochgeschirrs (3) gegenüber einer ersten Spuleneinheit (22) und einer zweiten Spuleneinheit (23) eines Induktionskochfeldes (2) derart, dass sich die Zuordnung der Bodenzonen (33, 34) zu den Spuleneinheiten (22, 23) geändert und von einer ersten Bodenzone (33) des Kochgeschirrbodens (32) eine geringere oder größere induktive Leistung aufgenommen werden kann als zuvor.
